# EUROPÄISCHE PATENTSCHRIFT

(11) **EP 2 045 451 B1**
(45) Veröffentlichungstag und Bekanntmachung des Hinweises auf die Patenterteilung: **12.12.2012**
(21) Anmeldenummer: 08017289.3
(22) Anmeldetag: 01.10.2008
(51) Int. Cl.: F16L 59/21, F01N 13/18, F01N 13/14, F01N 13/10

(54) **Isoliervorrichtung eines Kompensators**
Insulating device of a compensator
Dispositif d'isolation d'un compensateur

(30) Priorität: 01.10.2007 DE 202007013741 U
(43) Veröffentlichungstag der Anmeldung: 08.04.2009
(73) Patentinhaber: BDD Beteiligungs GmbH, 68169 Mannheim (DE)
(72) Erfinder: Darmstädter, Klaus, 68623 Lampertheim (DE); Cappellucci, Peter, 68199 Mannheim (DE)
(74) Vertreter: Schmitt, Meinrad

(56) Entgegenhaltungen:
- EP-A1- 0 403 943
- EP-A1- 0 568 835
- EP-A2- 1 134 478
- EP-A2- 1 443 259
- WO-A1-95/01530
- DE-A1- 3 307 457
- DE-A1- 3 540 231
- DE-A1- 4 414 738
- DE-U1- 8 522 123
- US-A1- 2006 032 218

## Beschreibung

Die Erfindung bezieht sich auf eine Isoliervorrichtung eines Kompensators einer Rohrleitung gemäß den im Oberbegriff des Anspruchs 1 angegebenen Merkmalen.

Aus der EP 1 134 478 A2 ist eine derartige anhand von Fig. 12 erläuterte Isoliervorrichtung bekannt. Der Rohr-Kompensator ist von einem Schutzrohr umgeben, auf welchem ein Innenmantel der Isoliervorrichtung aufliegt. Außerhalb des Bereiches des Rohr-Kompensators ist zwischen der Außenfläche des Rohres und dem Innenmantel ein Abstand vorhanden, wobei die Isoliervorrichtung ferner auf zum Rohr-Kompensator axial beabstandet angeordneten Flanschen aufliegt. Somit sind die radialen Außenabmessungen der vorbekannten Anordnung recht groß.

Weiterhin ist aus der EP 0 403 943 A1 eine thermische Isolierung für Rohrleitungskompensatoren bekannt, welche aus zwei Halbschalen besteht. Die Halbschalen enthalten eine aus Glasgewebe mit aufgedampfter Aluminiumfolie bestehende Außenhülle, wobei in der Mitte eine als Balg ausgebildete Knautschzone vorhanden ist. Die Halbschalen enthalten an ihren Enden Halbringe aus formstabilem Material und werden, nachdem sie um den Kompensator gelegt sind, mittels eines Reißverschlusses miteinander verbunden.

Eine Verbindungsanordnung zum Entkoppeln von Vibrationen in einem Abgassystem ist aus der US 2006/0032218 A1 bekannt. Der Rohr-Kompensator enthält ein zylindrisches deformierbares Element, welches mittels radial nach innen abgewinkelten Metallstücken mit anschlie-βenden Rohrteilen verbunden ist. Ein das genannte deformierbare Element umgebender Isolations-Kompensator enthält einen Außenmantel mit einer zentralen flexiblen Zone sowie an den beiden Enden starre Zonen, mittels welchen die Verbindung mit den Rohrteilen erfolgt.

Ferner ist aus der EP 0 568 835 A1 ein Kompensationselement für Kunststoffmantelrohrleitungen bekannt, welches aus einem biegbaren, einen Dehnraum umfassenden Hüllrohr, einen in diesem radial und beweglich gelagerten biegbaren Mediumrohr sowie Endstücken bekannt. Das Mediumrohr ist von einer Wärmedämmschicht umgeben und/oder mit einer Wärmschicht ausgekleidet. Innerhalb des gewellten Hüllrohres ist radial beabstandet die genannte Dämmschicht angeordnet, welche radial außen von einer Manschette umgeben ist und radial innen einen auf dem gewellt ausgebildeten Mediumrohr aufliegt.

Zudem ist aus der DE 10 2004 044 172 A1 eine Isoliervorrichtung bekannt, welche für eine Abgas-Rohrleitung einer Brennkraftmaschine ausgebildet ist. Die Rohrleitung enthält mehrere Kompensatoren und ist gemeinsam mit den Kompensatoren von einer Isoliervorrichtung umgeben.

Kompensatoren dienen vor allem zum Längenausgleich bei Temperaturänderungen infolge des die Rohrleitung durchströmenden heißen Abgases. Ferner können mittels der Kompensatoren Relativbewegungen und/oder Schwenkungen der übrigen Rohrteile quer und/oder radial zur Längsachse der Rohrleitung ausgeglichen werden. Derartige Bewegungen und/oder Änderungen der Rohrleitung führen zu erheblichen Beanspruchungen der Isoliervorrichtung, insbesondere im Bereich der Kompensatoren, wobei unerwünschte Veränderungen des Isolierverhaltens oder gar Beschädigungen der Isoliervorrichtung insgesamt zu befürchten sind und die Funktionsfähigkeit und Lebensdauer nachteilig beeinflusst werden können. Ein Austausch der Isoliervorrichtung ist mit einem erheblichen Aufwand verbunden.

Hiervon ausgehend liegt der Erfindung die Aufgabe zugrunde, die vorgenannten Nachteile zu vermeiden und mit einem geringen konstruktiven Aufwand die Isoliervorrichtung dahingehend weiterzubilden, dass eine optimierte Dämmwirkung erreicht und für eine lange Lebensdauer sichergestellt werden kann. Die Isoliervorrichtung soll einen geringen Fertigungs- und/oder Montageaufwand erfordern und in einfacher Weise an die jeweiligen Einsatzbedingungen und/oder die betrieblichen Anforderungen anpassbar sein. Die Isoliervorrichtung soll in einfacher Weise herstellbar sein und problemlos handhabbare und/oder miteinander zu verbindende Bestandteile enthalten. Des Weiteren soll die Isoliervorrichtung für ein die Rohrleitung und deren Rohr-Kompensator durchströmendes heißes Medium und/oder für hohe Temperaturen verwendbar sein, und zwar insbesondere für Temperaturen größer als 200°C, zweckmäßig größer als 500°C, bis hin zu 800°C, bevorzugt auch darüber bis 1.000°C. Zudem soll die Isoliervorrichtung in einfacher Weise mit dem Rohr-Kompensator und/oder der Rohrleitung verbindbar sein und/oder eine hohe Stabilität und Dauerfestigkeit aufweisen.

Die Lösung dieser Aufgabe erfolgt gemäß den im Patentanspruch 1 angegebenen Merkmalen.

Die erfindungsgemäße Isoliervorrichtung zeichnet sich durch einen einfachen konstruktiven Aufbau aus und besteht in bevorzugter Weise insgesamt aus Metall, und zwar sowohl der Innenmantel als auch der Außenmantel und insbesondere auch das innerhalb des Außenmantels angeordnete Isoliermaterial. Die Isoliervorrichtung oder zumindest ein Teil derselben ist einerseits auf einem der Rohrteile festgelegt und andererseits bezüglich des Rohr-Kompensators bewegbar ausgebildet und/oder angeordnet. Die Isoliervorrichtung ist als ein den Rohr-Kompensator umgebender Isolier-Kompensator erfindungsgemäß ausgebildet und gelangt bevorzugt für ein heißes Medium, wie Abgas, Dampf, pastöses Material oder Flüssigkeit zur Verwendung. Die Isoliervorrichtung ist rohrförmig ausgebildet und umgibt den Rohr-Kompensator und gegebenenfalls zumindest teilweise die axial beabstandet angeordneten Rohrteile, wobei die Isoliervorrichtung unmittelbar auf dem Rohr-Kompensator angeordnet ist. Der erfindungsgemäß vorgesehene Außenmantel ist vorteilhaft dicht, insbesondere flüssigkeitsdicht, ausgebildet, so dass Fremdstoffe nicht in das Isoliermaterial von außen eindringen können. Dies gilt ferner für Verbindungen mit an den Isolier-Kompensator anschließenden Isoliervorrichtungen und/oder mit den Rohrteilen.

Der Außenmantel besteht in bevorzugter Weise aus Metallblech oder Metallfolie, insbesondere aus Edelstahl, wobei zumindest die freie äußere Oberfläche des Außenmantels in zweckmäßiger Weise mikrostrukturiert und/oder makrostrukturiert oder gegebenenfalls auch im Wesentlichen glatt ausgeführt sein können. Der Außenmantel ist zumindest teilweise, bevorzugt aber insgesamt, flexibel ausgebildet und/oder enthält eine wellenartige Struktur, Profilierung oder Prägungen derart, dass die Isoliervorrichtung ebenso wie der Rohr-Kompensator vor allem Längenänderungen der angeschlossenen Rohrleitung ausgleichen kann. Das Isoliermaterial besteht und/oder enthält vorzugsweise Fasern oder Drähte, insbesondere Edelstahlwolle. Weiterhin kann das Isoliermaterial aus Folien oder Blechen bestehen oder solche enthalten, welche vor allem durch Profilierung, wie Wellen oder Prägungen, zumindest bereichsweise vorgegebene definierte Abstände zueinander aufweisen. Das Isoliermaterial ist ebenso wie der Außenmantel rein metallisch ausgebildet und somit problemlos recycelbar.

Weiterhin ist von besonderer Bedeutung, dass an gewünschten Positionen und zwar bevorzugt in Verbindungsbereichen oder an Verbindungsstellen von Außenmantel und/oder Isoliermaterial und/oder Innenmantel und ferner vor allem auch mit dem wenigstens einen Rohrteil Verbindungen, insbesondere Schweißverbindungen, vorhanden sind, welche insbesondere durch Punktschweißen und/oder Lichtbogenschweißen hergestellt sind. Es sei ausdrücklich darauf hingewiesen, dass die beiden axial zueinander beabstandet angeordneten Rohrteile Bestandteile der von einem heißen Medium durchströmbaren Rohrleitung sein können oder Bestandteile des insbesondere handelsüblichen Rohr-Kompensators sein können, wobei die Rohrteile eines solchen Rohr-Kompensators in bekannter Weise, insbesondere durch Schweißverbindungen und/oder Muffenverbindungen und/oder Flanschverbindungen dicht und fest verbunden werden. Weiterhin sind in bevorzugter Weise die Rohrteile und/oder die angeschlossene Rohrleitung von der Isoliervorrichtung oder von weiteren Isoliervorrichtungen umgeben. Die Isoliervorrichtung und insbesondere deren Isoliermaterial ist vor allem zur Wärmedämmung ausgebildet, wobei zusätzlich oder alternativ die Ausbildung zur Schalldämmung vorgesehen sein kann.

Der Außenmantel ist mittels Befestigungs- und/oder Stützkörpern mit den jeweiligen Enden auf den beiden Rohrteilen festgelegt, wobei der Außenmantel zumindest teilweise flexibel als Wellrohr oder Wellschlauch ausgebildet ist und gegebenenfalls Strukturen oder Profilierungen enthält, um Relativbewegungen der axial beabstandet angeordneten Rohrteile ausgleichen zu können.

Weiterbildungen und besondere Ausgestaltungen der Erfindung sind in den Unteransprüchen und der Beschreibung von Ausführungsbeispielen angegeben. Ausdrücklich sei darauf hingewiesen, dass die erfindungsgemäße Isoliervorrichtung nicht allein für den Einsatz oder die Kombination mit Brennkraftmaschinen bzw. Motoren und Abgas-Rohrleitungen derselben zur Verwendung gelangen können, sondern erfindungsgemäß auch für beliebig ausgebildete Aggregate, wie Turbinen oder Heißgasgebläse oder Wärmetauscher oder Extruder zur Kunststoffverarbeitung, wobei die heißen Medien gasförmig, dampfförmig, pastös oder flüssig sein können.

Die Erfindung wird nachfolgend anhand der in der Zeichnung dargestellten Ausführungsbeispiele näher erläutert, ohne dass insoweit eine Beschränkung erfolgt. Es zeigen in schematischen Darstellungen, wobei die Ausführungsbeispiele gemäβ Fig. 1 bis 8 nicht zur Erfindung gehören.
- Fig. 1: einen axialen Schnitt durch einen beispielshaft als Wellrohr ausgebildeten Rohr-Kompensator mit der umgebenden Isoliervorrichtung bzw. dem Isolier-Kompensator,
- Fig. 2: einen Schnitt entlang Schnittlinie A gemäß Fig. 1,
- Fig. 3: eine perspektivische Ansicht der Isoliervorrichtung im Montagezustand, bevor eine Schutzkappe positioniert ist,
- Fig. 4, 5: einen axialen Schnitt durch eine weitere Isoliervorrichtung sowie teilweise eine alternative Ausgestaltung,
- Fig. 6: eine perspektivische Ansicht eine Isoliervorrichtung ähnlich Fig. 4,
- Fig. 7: in einem axialen Schnitt einer Isoliervorrichtung bei welcher die dem Kompensator umgebende Isoliervorrichtung bezüglich der übrigen Isolierung mittels eines insbesondere flexiblen Dichtelements abgedichtet ist,
- Fig. 8: einen axialen Schnitt eine Isoliervorrichtung mit zwei Kompensatorteilen,
- Fig. 9: ein besonderes Ausführungsbeispiel der Isoliervorrichtung mit einem flexiblen metallischen Außenmantel gemäβ der Erfindung,
- Fig. 10: eine Ansicht des Außenmantels der Isoliervorrichtung gemäß Fig. 9,
- Fig. 11: die Isoliervorrichtung gemäß Fig. 9 im Montagezustand,
- Fig. 12: teilweise eine Ansicht der Isoliervorrichtung des Kompensators und der Rohrleitung,
- Fig. 13: in einer axialen Schnittebene verschiedene Varianten von Ringkörpern der Isoliervorrichtung,
- Fig. 14, 15: Ansichten in Blickrichtung B bzw. C der Ringkörper gemäß Fig. 13,
- Fig. 16: weitere Ausführungsbeispiele zur Befestigung und/oder Festlegung des als Wellrohr ausgebildeten Außenmantels der Isoliervorrichtung.

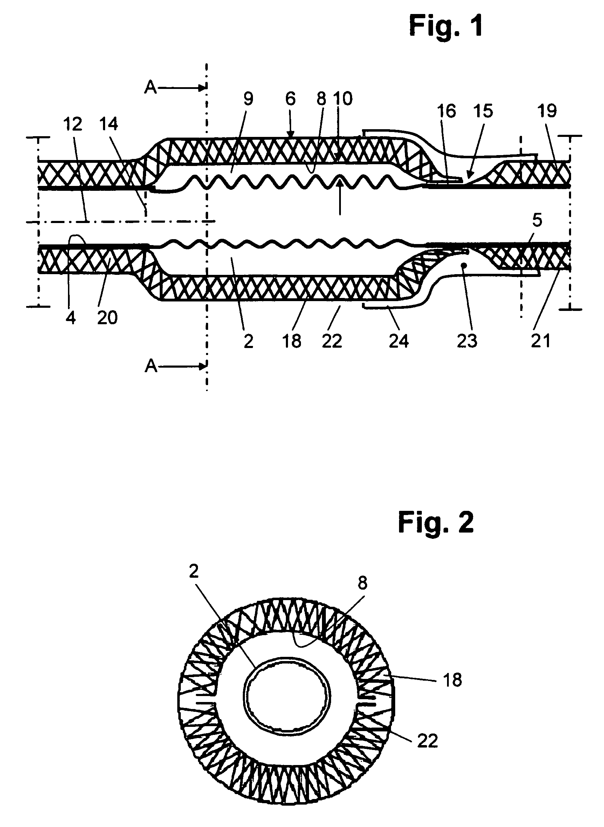

Fig. 1 und 2 zeigen Schnitte in einer axialen bzw. radialen Schnittebene der Rohrleitung mit einem Kompensator 2, welcher beispielshaft als flexibles Wellrohr oder Balg, insbesondere aus Metall, ausgebildet ist und mit den metallischen Rohrteilen 4, 5 in bekannter Weise insbesondere mittels Schweißverbindungen dicht und fest verbunden ist. Die Rohrteile 4, 5 können Bestandteile der nicht weiter dargestellten, links und rechts gemäß Zeichnung anschließenden Rohrleitung sein oder die Anschlußstutzen von handelsüblichen Kompensatoren, um eine dichte und feste Verbindung mit den übrigen Bestandteilen der Rohrleitung herzustellen, wie beispielsweise mittels Schweiß-, Flansch- oder Muffenverbindungen. Der Kompensator 2, welcher nachfolgend als Rohr-Kompensator bezeichnet wird, ist von einem weiteren Kompensator 6 umgeben, welcher nachfolgend als Isolier-Kompensator bezeichnet wird. Der Isolier-Kompensator 6 enthält einen bevorzugt metallischen Innenmantel 8, welcher unter Bildung eines ringförmigen Hohlraums 9 in einem radialen Abstand 10 den Rohr-Kompensator 2 umgibt. Der Abstand 10 ist entsprechend den Anforderungen und/oder Einsatzbedingungen und/oder Bewegungen des Rohrteils 5 zur Längsachse 12 des Rohrteils 4 dimensioniert. An einem dem Rohrteil 4 zugeordneten axialen Ende ist der Innenmantel 8 radial nach innen gebogen und, mittels einer strichpunktiert angedeuteten Verbindung 14, insbesondere Schweißverbindung, mit dem Rohrteil 4 bevorzugt dicht und/oder fest verbunden oder fest gelegt.

Am anderen axialen, und zwar freien Ende 15 ist der Innenmantel 8 gleichfalls nach innen gebogen und er weist dort einen Innendurchmesser derart auf, dass zum anderen oder zweiten Rohrteil 5 ein vorgegebener Ringspalt 16 vorhanden ist, dessen Größe von den Anforderungen, Einsatzbedingungen u.s.w. abhängig vorgegeben ist. Wie aus dem Schnitt A gemäß Fig. 2 ersichtlich, ist der metallische Innenmantel 8 bevorzugt zweiteilig ausgebildet, um die Fertigung und/oder Montage zu erleichtern. An den Längskanten der beiden Teile des Innenmantels 8 sind beispielsweise Flansche zur Verbindung der genannten Teile vorhanden. Es versteht sich, dass der Innenmantel 8, insbesondere in Abhängigkeit der Größe bzw. des Durchmessers des Rohr-Kompensators 2 auch aus mehr als zwei Teilen aufgebaut sein kann.

Das Rohrteil 4 ist ebenso wie der Innenmantel 8 des rohrförmigen Isolier-Kompensators 6 von Isoliermaterial oder Dämmstoff 18 umgeben, wobei der Innenmantel 8 im Bereich des Rohr-Kompensators 2 die radiale Abstützung des Dämmstoffs 18 sicherstellt. Der Dämmstoff 18 ist außen von einem metallischen Außenmantel 20, 22 umgeben. Die Außenmäntel 20, 21 sind in bevorzugter Weise einteilig ausgebildet, wobei erfindungsgemäß die Festlegung des Isolier-Kompensators 2 direkt mittels der Verbindung 14 auf dem Rohrteil 4 erfolgt. Des Weiteren ist das Rohrteil 5 gleichfalls von Isoliermaterial oder Dämmstoff 19 umgeben, welcher radial außen ebenfalls von einem metallischen Außenmantel 21 umgeben ist. Wie ersichtlich, ist im Bereich des Endes des Innenmantels 8 der Außenmantel 21 radial nach innen geführt und in vorteilhafter Weise mit dem Rohrteil 5, bevorzugt durch Schweißen, verbunden. Es sei ausdrücklich festgehalten, dass der Dämmstoff 18, 19 bzw. die Isolierung ebenso wie der Innenmantel 8 und die Außenmäntel 20, 21, 22 aus metallischen Werkstoffen bestehen und somit eine Vollmetallisolierung des Rohr-Kompensators 2 ebenso wie der gesamten Rohrleitung, welche auch von einer Vollmetallisolierung umgeben ist ,geschaffen ist, wodurch in besonders zweckmäßiger Weise ein einfaches Entsorgen und Recyceln erreicht ist.

Im gemäß Fig. 1 rechten Anschlussbereich des Isolier-Kompensators 6 an die Isolierung 19 mit dem Außenmantel 21 des Rohrteils 5 ist bevorzugt eine Schutzkappe 24 angeordnet, welche auf dem Außenmantel 21 der Isolierung des Rohrteils 5 festgelegt ist. Mittels der Schutzkappe 24 wird das Eindringen von Fremdstoffen, insbesondere entzündbarem Dieselkraftstoff, verhindert. Zudem wird vorteilhaft die Einbaulage der Rohrteile 4, 5 mit dem Rohr-Kompensator 2 bezüglich der Horizontalen derart vorgegeben, dass derartige Fremdstoffe über die Außenseite der Schutzkappe 24 abströmen können, ohne in den Hohlraum 9 bzw. den Anschlußbereich 23 und/oder das Isoliermaterial eindringen zu können.

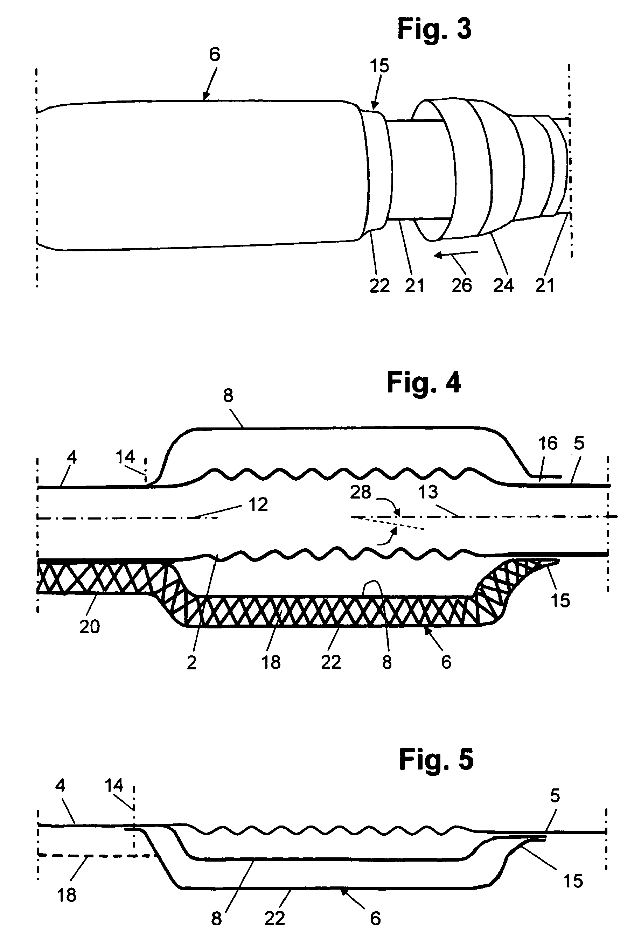

Fig. 3 zeigt eine perspektivische Ansicht der Isoliervorrichtung bzw. des Isolier-Kompensators 6 mit dem im Bereich des freien Endes 15 des Rohr-Kompensators radial nach innen gezogenen metallischen Außenmantel 22, welcher hierbei nicht unmittelbar das zweite Rohrteil unter Bildung eines Spaltes umgibt, sondern dessen metallischen Außenmantel 21. Die Schutzkappe 24 ist hierbei im Montagezustand dargestellt, bevor diese in Richtung des Pfeils 26 über das freie Ende 15 des Isolier-Kompensators 6 geschoben, gemäß Fig. 2 positioniert und auf dem Außenmantel 21, insbesondere durch Schweißen und/oder Punktschweißen, befestigt wird.

Fig. 4 zeigt die Isoliervorrichtung ähnlich Fig. 1, wobei im oberen Teil der Montagezustand dargestellt ist, ohne das Isoliermaterial, während im unteren Teil das Isoliermaterial 18 auf dem Innenmantel 8 des Isolier-Kompensators 6 und dem Rohrteil 4 sowie auf jenem der Außenmantel 22 angeordnet ist. Der Innenmantel 8 des Isolier-Kompensators 6 ist mittels der Verbindung 14 auf dem Rohrteil 4 befestigt, wobei erfindungsgemäß ein Festlager des Isolier-Kompensators 6 auf dem Rohrteil 4 geschaffen ist. Am anderen, gemäß der Zeichnung rechten freien Ende 15 des Außenmantels 8 ist zwischen diesem und dem Rohrteil 5 der Spalt 16 vorhanden, so dass der Isolier-Kompensator 6 grundsätzlich unabhängig von Relativbewegungen der Rohrteile 4, 5 ist. Sofern die Längsachse 13 des Rohrteils 5 koaxial zur Längsachse 12 des Rohrteils 4 ausgerichtet ist, können Längenänderungen der Rohrteile 4, 5 ohne jede Beeinflussung des Isolier-Kompensators 6 erfolgen. Darüber hinaus können erfindungsgemäß ein Versatz der Längsachsen 12, 13 in radialer Richtung oder um einen Winkel 28 der Rohrteile 4, 5 erfolgen, und zwar in Abhängigkeit der Größe des Ringspaltes 16 bei koaxialer Ausrichtung der Längsachsen 12, 13. Weiterhin führt ein Versatz der Rohrteile 4, 5 derart, dass das Rohrteil 5 an einer Stelle des Umfangs zur Anlage an den nach innen gezogenen Außenmantel 8 gelangt und somit dort der Spalt gegen Null geht, zu keiner wesentlichen Belastung des Isolier-Kompensators 6. In einem solchen Fall gelangt das Rohrteil 5 nur über einen recht kleinen Umfangswinkelbereich zur Anlage an den Isolier-Kompensator 6. Im Bereich des freien Endes 15 ist somit grundsätzlich ein Loselager vorhanden, welches Relativbewegungen des Rohrteils 5 bezüglich dem Isolier-Kompensator 6 ermöglicht, zumal über einen erheblich größeren Umfangswinkelbereich der dann sichelförmige Spalt 16 vorhanden ist. Übermäßige oder gar unzulässige Beanspruchungen des Isolier-Kompensators 6 werden somit selbst bei recht großem Radial- und/oder Winkelversatz weitestgehend vermieden.

Fig. 5 zeigt eine alternative Ausgestaltung, gemäß welcher sowohl der Innenmantel 8 als auch der Außenmantel 22 des Isolier-Kompensators 6 in vorteilhafter Weise gemeinsam mit dem Rohrteil 4 verbunden sind. Mit gestrichelter Linie ist die an den Isolier-Kompensator 6 unmittelbar anschließende Isolierung 18 des Rohrteils 4 angedeutet.

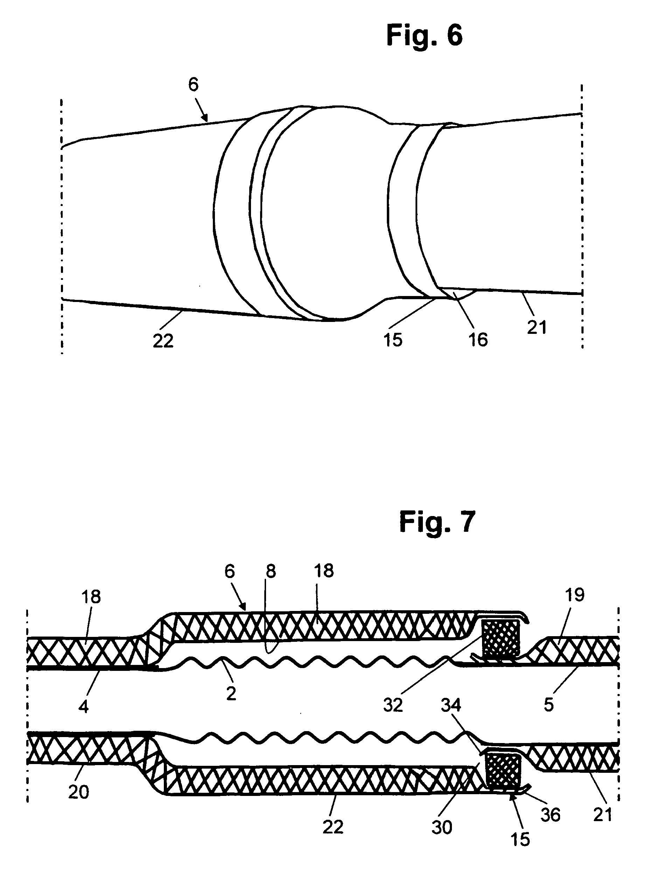

Fig. 6 zeigt eine perspektivische Ansicht eines Ausführungsbeispiels, bei welchem das radial nach innen gebogene freie Ende 15 des Isolier-Kompensators 6 den Außenmantel 21 des zweiten Rohrteils übergreift. Der anhand von Fig. 4 erläuterte Ringspalt 16 ist somit am freien Ende 15 zwischen dem dort vorhandenen Teil des Innenmantels des Isolier-Kompensators 6 und dem Außenmantel 21 vorhanden. Im Rahmen der Erfindung kann analog zu Fig. 1 in vorteilhafter Weise auch hier eine Schutzkappe vorgesehen sein.

In Fig. 7 ist ein Ausführungsbeispiel mit einem Isolier-Kompensator 6 dargestellt, an dessen freien Ende 15 der Innenmantel 8 radial nach außen gebogen ist und mit dem Außenmantel 22, insbesondere durch Schweißen, fest verbunden ist. Der Außenmantel 21 der das Rohrteil 5 umgebenen Isolierung ist in diesem Bereich hingegen radial nach innen gebogen und mit der Außenwand des Rohrteils 5, insbesondere durch Schweißen verbunden. Das freie Ende 15 überlappt in bevorzugter Weise axial das nach innen gebogene Teil 34 des Außenmantels 21 derart, dass zwischen dem freien Ende 15 und dem radial nach innen gebogenen Endteil des Außenmantels 21 ein Ringraum 30 vorhanden ist. In diesem Ringraum 30 ist ein flexibles Dichtelement 32 angeordnet, welches einerseits radial außen am Innenmantel 8 und andererseits radial innen am Außenmantel 21 dichtend anliegt. Wie ersichtlich, ist ferner das Endteil 34 des Außenmantels 21 radial nach außen gebogen, während im Bereich des freien Endes 15 das überlappende Endteil 36 des Innenmantels 8 radial nach innen gebogen ist, wodurch das flexible Dichtelement 32 funktionssicher im Ringraum 30 festgelegt ist. Der axiale Abstand zwischen den Endteilen 34, 36 ist in bevorzugter Weise größer als die axiale Länge des Dichtelements 32, so dass Relativbewegungen des Isolier-Kompensators 6 bezüglich des Rohrteils 5 ohne weiteres und vor allem ohne Beanspruchung des Isolier-Kompensators 6 erfolgen können.

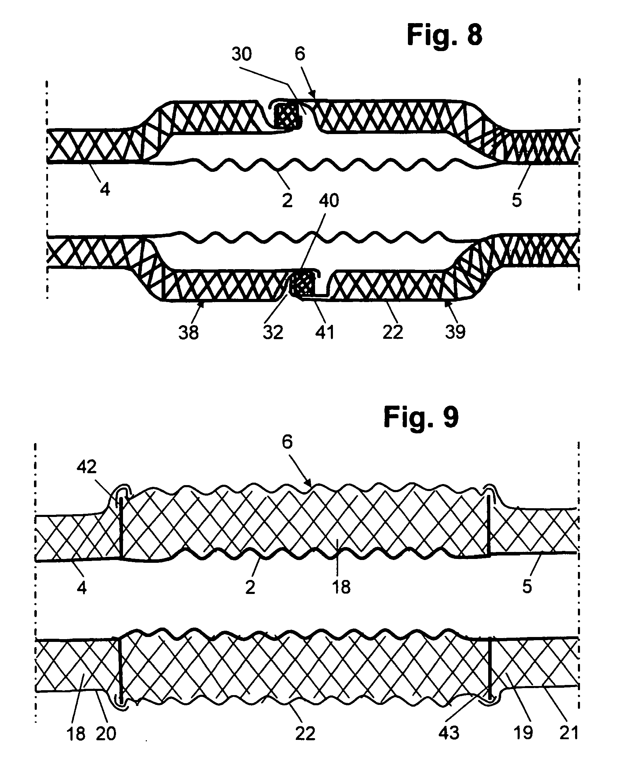

Der Isolier-Kompensator 6 gemäß Fig. 8 ist zweiteilig ausgebildet, wobei ein gemäß Zeichnung linker Teil 38 mit dem Rohrteil 4 fest verbunden ist und zwar analog zum Ausführungsbeispiel der Fig. 1, während der rechte Kompensatorteil 39 mit dem zweiten Rohrteil 5 ebenfalls fest verbunden ist. Die zweckmäßig in der Mitte der Längserstreckung des Rohr-Kompensators 2 vorgesehenen Enden 40, 41 der Kompensatorteile 38, 39 überlappen axial unter Bildung des Ringraums 30 zur Aufnahme des Dichtelements 32. Analog zum Ausführungsbeispiel gemäß Fig. 7 sind an den Endteilen 34, 36 die Enden des jeweiligen Innenmantels 8 und des zugeordneten Außenmantels 22 gebogen und miteinander zur Festlegung des Dichtelements 32 im Ringraum 30 miteinander verbunden.

Fig. 9 zeigt eine besondere Ausgestaltung des Isolier-Kompensators 6 mit dem als Wellrohr ausgebildeten und flexiblen metallischen Außenmantel 22, bevorzugt aus Edelstahl. Zwischen dem insbesondere als Wellrohr ausgebildeten Rohr-Kompensator 2 und dem Wellrohr bzw. flexiblen Außenmantel 22 ist das Isoliermaterial bzw. der Dämmstoff 18 angeordnet. Hierbei ist von besonderer Bedeutung, dass das Isoliermaterial 18, weiches den Rohr-Kompensator 2 umgibt, ebenso wie dieser flexibel ausgebildet ist. Im Anschluss an das innenliegende Wellrohr des Rohr-Kompensators 2 sind sowohl auf dem Rohrteil 4 als auch auf dem Rohrteil 5 sich im Wesentlichen in radialer Richtung nach außen erstreckende Körper 42, 43 angeordnet und befestigt, auf welchen der flexible metallische Außenmantel 22 in Form des Wellrohres aufgelegt und/oder abgestützt und/oder in geeigneter Weise befestigt ist. Der rohrförmige Außenmantel 22 ist somit an seinen beiden axialen Enden mittelbar über die Körper 42 bzw. 43 einerseits auf dem einen Rohrteil 4 und andererseits auf dem zweien Rohrteil 5 festgelegt und/oder mit diesen verbunden. Die Körper 42, 43 sind insbesondere als Ringkörper ausgebildet und die Befestigung der jeweiligen Enden des flexiblen Außenmantels bzw. Wellrohrs 22 erfolgt insbesondere durch Schweißen oder mittels Rohrschellen oder dergleichen. An den derart ausgebildeten Isolier-Kompensator 6 und insbesondere die genannten Körper 42, 43 schließen in beiden axialen Richtungen über den jeweiligen Rohrteilen 4, 5 und diese umgebend die Isolierungen bzw. das Isoliermaterial 18, 19 mit den metallischen Außenmänteln 20, 21 unmittelbar an. In bevorzugter Weise sind die den Körpern 42, 43 zugeordneten Enden der Außenmäntel 20, 21 mit den Enden des Wellrohrs 22, bevorzugt ferner mit den Körpern 42, 43, insbesondere durch Schweißen und/oder Umbördeln, verbunden.

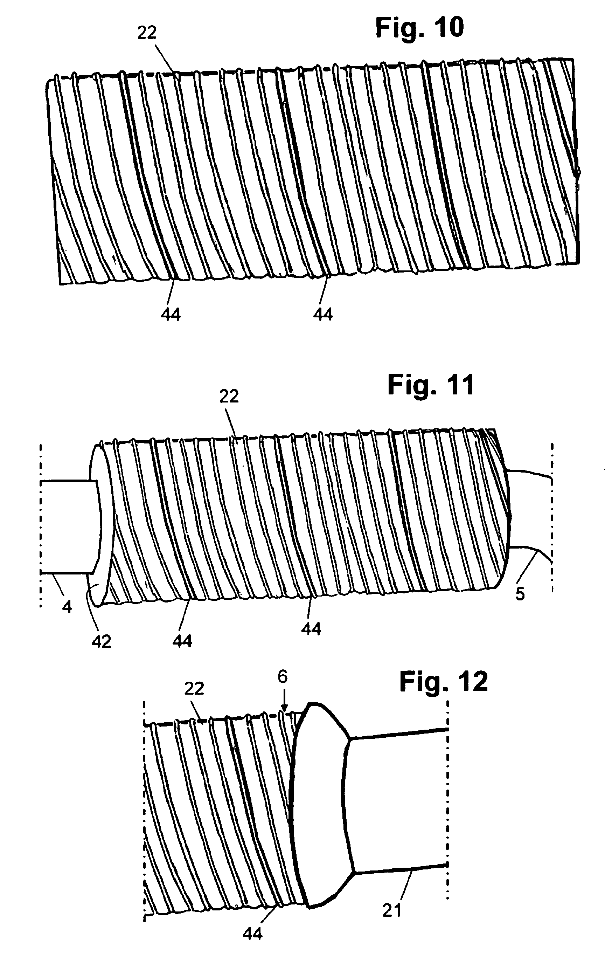

Fig. 10 zeigt eine seitliche Ansicht des als Wellrohr ausgebildeten Außenmantels 22 des Isolier-Kompensators. Der Außenmantel 22 ist als Wendel aus einem gewellten Blechstreifen gebildet, wobei die in der im Wesentlichen zylindrischen Wendel aneinander liegenden Längskanten des ursprünglichen geraden Blechstreifens in bevorzugter Weise dicht miteinander verbunden sind und einen entsprechend wendelförmigen Verbindungsbereich 44 aufweisen, insbesondere in Form einer Schweißnaht. Der vor dem Formen zu einer Wendel ursprünglich sich in einer geraden Längsrichtung erstreckende Blechstreifen ist quer zur Längsrichtung gewellt, wobei zweckmäßig abgerundete Wellentäler und Wellenhöhen quer zur Längsrichtung vorhanden sind. Nach dem Aufwickeln zu einer Wendel verlaufen die Wellentäler und Wellenhöhen in einem entsprechenden Winkel geneigt zur Längsachse des Außenmantels bzw. nach der Fertigung des Isolier-Kompensators.

In Fig. 11 ist der Isolier-Kompensator 6 mit dem als Wellrohr ausgebildeten Außenmantel 22 nach der Montage um den Rohr-Kompensator und auf den Rohrteilen 4, 5 dargestellt. Der erläuterte und mit dem Rohrteil 4 verbundene Körper 42 ist teilweise zu erkennen.

Fig. 12 zeigt teilweise den Isolier-Kompensator 6 mit dem als Wellrohr ausgebildeten Außenmantel 22, und zwar nach der endgültigen Montage auch der Isolierung des zweiten Rohrteils mit der umgebenden Isolierung und deren Außenmantel 21. Das dem Isolier-Kompensator 6 zugeordnete Ende des metallischen Außenmantels 21 ist radial nach außen gebogen und/oder aufgeweitet derart, dass das Ende des Wellrohrs 22 übergriffen wird, wobei in bevorzugter Weise dort der Außenmantel 21 mit dem Ende des Wellrohrs 22 durch Schweißen verbunden ist.

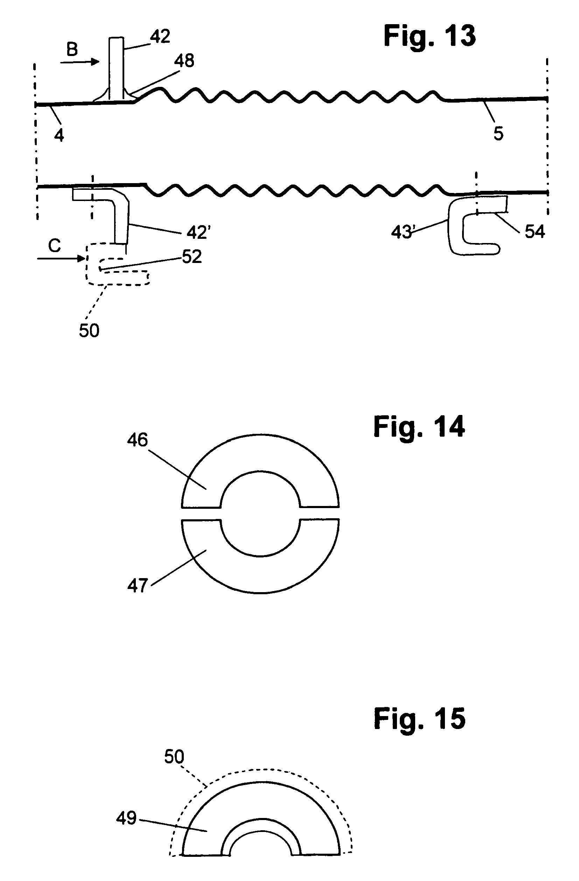

In Fig. 13 bis 15 sind Varianten des Ringkörpers 42, 43 zur Festlegung des flexiblen Außenmantels 22 des Isolier-Kompensators 6 dargestellt, wobei das Isoliermaterial der Einfachheit halber weggelassen ist. So besteht der in Fig. 13 links oben dargestellte Ringkörper 42 aus zwei sich jeweils über 180° erstreckende Ringsegmenten 46, 47, welche bei Blickrichtung B in Fig. 14 dargestellt sind und mittels einer Schweißnaht 48 mit dem Rohrteil 4 verbunden sind. Die halbkreisförmigen Ringsegmente 46, 47 sind in zweckmäßiger Weise Laser- oder Stanzteile, welche in radialer Richtung vom Rohrteil 4 nach außen abstehen. Der in Fig. 13 links unten dargestellte Ringkörper 42' ist aus einem L-Profil hergestellt und insbesondere als ein Stanz- oder Pressteil ausgebildet. Der Ringkörper 42' ist ebenfalls zumindest zweiteilig ausgebildet, wobei in Fig. 15 das eine Ringsegment 49 in Blickrichtung C gemäß Fig. 13 dargestellt ist. Der Ringkörper 42' liegt mit dem zum Rohrteil 4 koaxialen Schenkel auf dem Rohrteil 4 auf und ist insbesondere durch Widerstandsschweißen mit dem Rohrteil 4 verbunden, wie mittels strichpunktierter Linie angedeutet. Gemäß einer mit gestrichelten Linien angedeuteten Weiterbildung weist der Ringkörper 42' bzw. dessen jeweiliges Ringsegment 49 radial außen eine Abwinkelung 50 derart auf, dass der als Wellrohr ausgebildete Außenmantel des Isolier-Kompensators mit seinem Ende in den durch die Abwinkelung gebildeten und zum anderen Ende des Außenmantels offenen Freiraum 52 eingreift. Die in Fig. 13 rechts unten dargestellte Variante des Ringkörpers 43' ist als ein U-Profil ausgebildet, wobei in bevorzugter Weise wiederum zwei halbkreisförmige Ringsegmente vorgesehen sind. Auch bei dieser Variante ist der zum Rohrteil 5 koaxiale und auf diesem aufliegende innere Schenkel 54 in vorteilhafter Weise mit dem Rohrteil 5 durch Widerstandsschwei-βen verbunden. Der als U-Profil ausgebildete Ringkörper bzw. dessen halbkreisförmige Ringsegmente sind wiederum als Stanz- oder Preßteile ausgebildet.

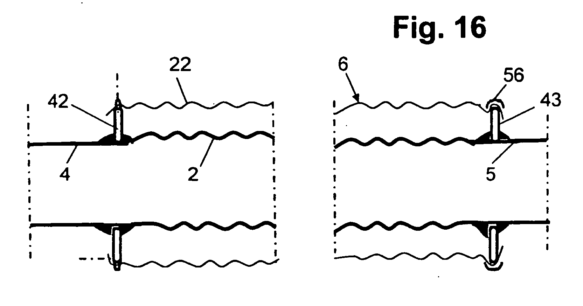

Fig. 16 zeigt Ausführungsbeispiele der Festlegung und/oder Befestigung des flexiblen, insbesondere als Wellrohr ausgebildeten Außenmantels 22 des Isolier-Kompensators 6. Links oben ist die Befestigung des Endes des Außenmantels 22 auf dem Außenrand des Ringkörpers 42 mittels Verpressen und Widerstandsschweißen dargestellt. Gemäß der links unten dargestellten Variante erfolgt die Befestigung durch Umlegen des Endes des Außenmantels 22 radial nach innen und seitliches Widerstandsschweißen und/oder Punktschweißen. Wie bei den links dargestellten Varianten greift bei dem rechts dargestellten Ausführungsbeispiel der Ringkörper 43 mit seinem Außenrand in ein radial nach innen offenes Wellental am Ende des Außenmantels 22 ein. Radial außen über dem Ende des Außenmantels 22 ist eine metallische Schelle 56 vorgesehen, wobei radial innen in der gleichen Radialebene der Ringkörper 43 angeordnet ist. Die ringförmige Schelle 56 umgreift und/oder übergreift das auf dem Außenrand des Ringkörpers 43 aufliegende und/oder von diesem abgestützte Ende des Außenmantels 22 und mittels der radial nach innen offenen Schelle 56 wird durch Verpressen somit der Isolier-Kompensator 6 auf dem Rohrteil 5 befestigt.

### Bezugszeichen

- 2: Rohr-Kompensator
- 4, 5: Rohrteil
- 6: Isolier-Kompensator
- 8: metallischer Innenmantel von 6
- 9: Hohlraum zwischen 2 und 6
- 10: Abstand zwischen 2 und 8
- 12, 13: Längsachse von 4 bzw. 5
- 14: Schweißverbindung
- 15: freies axiales Ende von 6
- 16: Spalt
- 18, 19: Dämmstoff / Isoliermaterial
- 20, 21: metallischer Außenmantel von 18, 19
- 22: metallischer Außenmantel von 6
- 23: Anschlussbereich
- 24: Schutzkappe
- 26: Pfeil
- 28: Versatz bzw. Winkel
- 30: Ringraum
- 32: Dichtelement
- 34: Endteil von 21
- 36: Endteil von 8
- 38, 39: Kompensatorteil
- 40, 41: Ende von 38 bzw. 39
- 42, 43: Körper/ Ringkörper
- 44: wendelförmiger Verbindungsbereich
- 46, 47: Ringsegment von 42
- 48: Schweißnaht
- 49: Ringsegment von 42'
- 50: Abwinkelung an 49
- 52: Freiraum
- 54: innerer Schenkel von 43'
- 56: Schelle
- 58: Stützring
- 60: Sicke in 58
- 62: Schenkel von 58
- 64: Flansch
- 66,67: Endteil von 20, 21
- 68: Spalt zwischen 66, 67

## Patentansprüche

1. Anordnung mit einem Kompensator (2) einer Rohrleitung und mit einer Isoliervorrichtung, welche einen flexiblen metallischen Außenmantel (22) und Isoliermaterial (18) enthält und den Rohr-Kompensator (2) umgibt, wobei der Rohr-Kompensator (2) Rohrteile (4, 5) enthält oder mit solchen Rohrteilen (4, 5) einer Rohrleitung verbunden ist, welche von einem insbesondere heißen Medium durchströmbar ist, wobei der Rohr-Kompensator (2) als Wellrohr ausgebildet ist,
**dadurch gekennzeichnet, dass** im Anschluss an das innen liegende Wellrohr des Rohr-Kompensators (2) auf den Rohrteilen (4, 5) sich im Wesentlichen in radialer Richtung nach außen erstreckende Ringkörper (42, 43) angeordnet und befestigt sind,
dass der flexible Außenmantel (22) der Isoliervorrichtung als Wellrohr oder Wellschlauch ausgebildet ist,
dass der flexible Außenmantel (22) mit seinen jeweiligen Enden auf den Ringkörpern (42, 43) abgestützt und befestigt ist
und dass das Isoliermaterial (18) unmittelbar auf dem Wellrohr des Rohr-Kompensators (2) zwischen diesem und dem Außenmantel (22) angeordnet und flexibel ausgebildet ist.

2. Anordnung nach Anspruch 1, **dadurch gekennzeichnet, dass** die Isoliervorrichtung als Isolier-Kompensator (6) ausgebildet ist, wobei der Außenmantel (22) das Isoliermaterial (18) umgibt, und vollständig aus metallischen Werkstoffen ausgebildet ist.

3. Anordnung nach Anspruch 1 oder 2, **dadurch gekennzeichnet, dass** die jeweiligen Enden des flexiblen Außenmantels (22) durch Schweißen oder mittels Rohrschellen mit den Ringkörpern (42, 43) verbunden sind.

4. Anordnung nach einem der Ansprüche 1 bis 3, **dadurch gekennzeichnet, dass** der als Wellrohr ausgebildete Außenmantel (22) als Wendel aus einem gewellten Blechstreifen gebildet ist.

5. Anordnung nach einem der Ansprüche 1 bis 4, **dadurch gekennzeichnet, dass** anschließend an die als Isolier-Kompensator (6) ausgebildete Isoliervorrichtung in beiden axialen Richtungen über den jeweiligen Rohrteil (4, 5) und diese umgebend Isoliermaterial (18, 19) mit Außenmänteln (20, 21) unmittelbar anschließen, wobei deren den Ringkörper (42, 43) zugeordneten Enden mit den Enden des als Wellrohr ausgebildeten Außenmantels (22) sowie den Ringkörpern (42, 43) durch Schweißen und /oder Umbördeln verbunden sind.

6. Anordnung nach einem der Ansprüche 1 bis 5, **dadurch gekennzeichnet, dass** die Ringkörper (42, 43) aus zwei sich jeweils über 180° erstreckende Ringsegmenten (46, 47) bestehen, welche mittels einer Schweißnaht (48) mit dem Rohrteil (4) verbunden sind.

7. Anordnung nach Anspruch 6, **dadurch gekennzeichnet, dass** die halbkreisförmigen Ringsegmente (46, 47) als lasergefertigte Teile oder Stanzteile ausgebildet sind, welche in radialer Richtung nach außen abstehen.

8. Anordnung nach einem der Ansprüche 1 bis 5, **dadurch gekennzeichnet, dass** der Ringkörper (42') zumindest zweiteilig ausgebildet ist und einen zum Rohrteil (4) koaxialen Schenkel aufweist, welcher insbesondere durch Widerstandsschweißen mit dem Rohrteil (4) verbunden ist.

9. Anordnung nach einem der Ansprüche 1 bis 8, **dadurch gekennzeichnet, dass** der Ringkörper (42) oder dessen jeweiliges Ringsegment (49) radial außen eine Abwinkelung (50) mit einem Freiraum (52) aufweist, in welche das Wellrohr des Außenmantels (22) mit seinem Ende eingreift.

10. Anordnung nach einem der Ansprüche 1 bis 6 oder 8, **dadurch gekennzeichnet, dass** der Ringkörper (43') als U-Profil ausgebildet ist, wobei bevorzugt zwei halbkreisförmige Ringsegmente vorgesehen sind.

## Claims

1. An arrangement with a compensator (2) of a pipeline and an insulating device, which contains a flexible metallic outer casing (22) and insulating material (18) and which surrounds the pipe compensator (2), wherein the pipe compensator (2) contains pipe parts (4, 5) or is connected to such pipe parts (4, 5) of a pipeline, through which an in particular hot medium can flow, wherein the pipe compensator (2) is constituted as a corrugated pipe,
**characterised in that**, following the inner corrugated pipe of the pipe compensator (2), annular bodies (42, 43) extending outwards essentially in the radial direction are disposed and fixed on the pipe parts (4, 5),
that the flexible outer casing (22) of the insulating device is constituted as a corrugated pipe or corrugated hose,
that the flexible outer casing (22) is supported and fixed with its respective ends on the annular bodies (42, 43),
and that the insulating material (18) is disposed directly on the corrugated pipe of the pipe compensator (2) between the latter and the outer casing (22) and is constituted flexible.

2. The arrangement according to claim 1, **characterised in that** the insulating device is constituted as an insulating compensator (6), wherein the outer casing (22) surrounds the insulating material (18) and is constituted completely by metallic materials.

3. The arrangement according to claim 1 or 2, **characterised in that** the respective ends of the flexible outer casing (22) are connected to the annular bodies (42, 43) by welding or by means of pipe clips.

4. The arrangement according to any one of claims 1 to 3, **characterised in that** the outer casing (22) constituted as a corrugated pipe is formed as a helix comprising a corrugated sheet metal strip.

5. The arrangement according to any one of claims 1 to 4, **characterised in that** the insulating device constituted as an insulating compensator (6) is immediately followed, in both axial directions over the respective pipe part (4, 5) and surrounding the latter, by insulating material (18, 19) with outer casings (20, 21), wherein its ends associated with the annular bodies (42, 43) are connected by welding and/or flanging to the ends of the outer casing (22) constituted as a corrugated pipe and to the annular bodies (42, 43).

6. The arrangement according to any one of claims 1 to 5, **characterised in that** the annular bodies (42, 43) comprise two annular segments (46, 47) extending in each case over 180°, said angular segments being connected to the pipe part (4) by means of a weld seam (48).

7. The arrangement according to claim 6, **characterised in that** the semicircular annular segments (46, 47) are constituted as laser-produced parts or stamped parts, which project outwards in the radial direction.

8. The arrangement according to any one of claims 1 to 5, **characterised in that** the annular body (42') is constituted by at least two parts and comprises a leg coaxial with the pipe part (4), said leg being connected to the pipe part (4) especially by resistance welding.

9. The arrangement according to any one of claims 1 to 8, **characterised in that** the annular body (42) or its respective annular segment (49) comprises radially outwards a bent-off portion (50) with a free space (52), into which the corrugated pipe of the outer casing (22) engages with its end.

10. The arrangement according to any one of claims 1 to 6 or 8, **characterised in that** the annular body (43') is constituted as a U-profile, wherein two semicircular annular segments are preferably provided.

## Revendications

1. Agencement comprenant un compensateur (2) d'un tuyau et un dispositif d'isolation qui contient une enveloppe extérieure (22) flexible métallique et du matériau isolant (18) et entoure le compensateur de tuyau (2), sachant que le compensateur de tuyau (2) contient des parties de tuyau (4, 5) ou est relié à de telles parties de tuyau (4, 5) d'un tuyau qui peut être traversé par un fluide chaud en particulier, sachant que le compensateur de tuyau (2) est formé en tant que tuyau ondulé,
**caractérisé en ce que** dans le raccordement au tuyau ondulé du compensateur de tuyau (2) reposant à l'intérieur, des corps annulaires (42, 43) s'étendant essentiellement en direction radiale vers l'extérieur sont disposés et fixés sur les parties de tuyau (4, 5),
que l'enveloppe extérieure (22) flexible du dispositif d'isolation est formée en tant que tuyau ou flexible ondulé,
que l'enveloppe extérieure (22) flexible s'appuie, et est fixée, sur les corps annulaires (42, 43) par ses extrémités respectives,
et que le matériau isolant (18) est formé de manière flexible et disposé directement sur le tuyau ondulé du compensateur de tuyau (2), entre celui-ci et l'enveloppe extérieure (22).

2. Agencement selon la revendication 1, **caractérisé en ce que** le dispositif d'isolation est formé en tant que compensateur d'isolation (6), sachant que l'enveloppe extérieure (22) entoure le matériau isolant (18) et est formée intégralement en matériaux métalliques.

3. Agencement selon la revendication 1 ou 2, **caractérisé en ce que** les extrémités respectives de l'enveloppe extérieure (22) flexible sont reliées aux corps annulaires (42, 43) par soudure ou par des colliers pour tuyaux.

4. Agencement selon l'une des revendications 1 à 3, **caractérisé en ce que** l'enveloppe extérieure (22) formée en tant que tuyau ondulé est fabriquée en tant que spirale à partir d'une bande de tôle ondulée.

5. Agencement selon l'une des revendications 1 à 4, **caractérisé en ce qu'**en se raccordant sur le dispositif d'isolation formé en tant que compensateur d'isolation (6) dans les deux sens axiaux sur la partie de tuyau (4, 5) respective et en l'entourant, du matériau d'isolation (18, 19) et des enveloppes extérieures (20, 21) se raccordent directement, sachant que leurs extrémités attribuées au corps annulaires (42, 43) sont reliées aux extrémités de l'enveloppe extérieure (22) formée en tant que tuyau ondulé ainsi qu'aux corps annulaires (42, 43) par soudure et/ou par sertissage.

6. Agencement selon l'une des revendications 1 à 5, **caractérisé en ce que** les corps annulaires (42, 43) sont composés de deux segments annulaires (46, 47) s'étendant respectivement sur 180°, lesquels sont reliés à la partie de tuyau (4) via un cordon de soudure (48).

7. Agencement selon la revendication 6, **caractérisé en ce que** les segments annulaires (46, 47) en forme de demi-cercle sont formés en tant que pièces fabriquées au laser ou pièces estampées, lesquelles font saillie vers l'extérieur en direction radiale.

8. Agencement selon l'une des revendications 1 à 5, **caractérisé en ce que** le corps annulaire (42') est formé au moins en deux parties et présente une branche coaxiale par rapport à la partie de tuyau (4), laquelle est reliée à la partie de tuyau (4) en particulier par soudure par résistance.

9. Agencement selon l'une des revendications 1 à 8, **caractérisé en ce que** le corps annulaire (42) ou son segment annulaire (49) respectif présente radialement à l'extérieur un coude (50) avec un espace libre (52) dans lequel le tuyau ondulé de l'enveloppe extérieure (22) se met en prise par son extrémité.

10. Agencement selon l'une des revendications 1 à 6 ou 8, **caractérisé en ce que** le corps annulaire (43') est formé en tant que profilé en U, sachant que de préférence deux segments annulaires en forme de demi-cercle sont prévus.
